Europäisches Patentamt

European Patent Office

Office européen des brevets

(19)

(11) Veröffentlichungsnummer : **0 412 248 B1**

(12) **EUROPÄISCHE PATENTSCHRIFT**

(45) Veröffentlichungstag der Patentschrift :
**19.07.95 Patentblatt 95/29**

(51) Int. Cl.$^6$ : **G01S 11/14**

(21) Anmeldenummer : **90108768.4**

(22) Anmeldetag : **10.05.90**

(54) **Verfahren zum passiven Bestimmen von Zieldaten.**

(30) Priorität : **10.08.89 DE 3926378**

(43) Veröffentlichungstag der Anmeldung :
**13.02.91 Patentblatt 91/07**

(45) Bekanntmachung des Hinweises auf die
Patenterteilung :
**19.07.95 Patentblatt 95/29**

(84) Benannte Vertragsstaaten :
**DE DK FR GB IT NL SE**

(56) Entgegenhaltungen :
**DE-A- 3 322 500
US-A- 4 754 282
AEÜ - ARCHIV FÜR ELEKTRONIK &
ÜBERTRAGUNGSTECHNIK, Band 40, Nr. 6 No-
vemver/Dezember 1986, Seiten 367-376, Stuttgart, DE; J.F. BÖHME :"Signalschätzung mit
Sensorgruppen in Wellenfeldern"**

(56) Entgegenhaltungen :
**SIGNAL PROCESSING IV: THEORIES AND AP-
PLICATIONS PROCEEDINGS OF EUSIPCO-88,
FOURTH EUROPEAN SIGNAL PROCESSING
CONFERENCE, Grenoble, 5. - 8. September
1988, Seiten 303-306; S. BOURENNANE et al.:
"Detection and localization of underwater wi-
de-band acoustic sources"**

(73) Patentinhaber : **STN ATLAS Elektronik GmbH
Sebaldsbrücker Heerstrasse 235
D-28305 Bremen (DE)**

(72) Erfinder : **Arens, Egidius, Dipl.-Ing.
Cordstrasse 13
D-2807 Achim (DE)**
Erfinder : **Fischer, Johannes, Dipl.-Ing.
Auf dem Kamp 23A
D-2804 Lilienthal (DE)**
Erfinder : **Schulte, Alfred, Dipl.-Ing.
Eutinerstrasse 31
D-2803 Weyhe (DE)**

## Beschreibung

Die Erfindung betrifft ein Verfahren zum passiven Bestimmen von Zieldaten eines Fahrzeugs von einem Meßort aus nach der im Oberbegriff im Anspruch 1 genannten Art. Überall dort, wo Fahrzeuge beobachtet, überwacht, verfolgt oder bekämpft werden sollen, benötigt man Meßmethoden zum Erfassen von Position, Fahrzeuggeschwindigkeit und Kurs, die ohne Eigenverrat arbeiten. Beispielsweise beim Küstenschutz sollen passierende Wasserfahrzeuge eine Überwachung einer Küstenregion durch an Bord befindliche Radar- oder Sonaranlagen nicht feststellen können, um im Falle einer Invasion Verteidigungsmaßnahmen zielgerecht einleiten zu können. Das Bestimmen von Zieldaten in einem anderen Meßgebiet, z.B. offenen Seegebiet, dient bei einem anderen militärischen Anwendungsfall der Beurteilung einer Gefechtssituation und Abschätzung der Wirksamkeit taktischer Maßnahmen.

In der US-A-4 754 282 wird beispielsweise ein Sonarsystem zum Peilen von Zielen beschrieben, bei dem Empfangssignale von Wandlern seiner Empfangsanlage einer Frequenzanalyse zugeführt werden und Frequenzkomponenten von Frequenzspektren der Empfangssignale miteinander korreliert werden. In einem Modellspeicher sind Signale abgespeichert, die eine Funktion von Einfallsrichtungen der vom Ziel abgestrahlten Wellenenergie und Frequenz sind, mit denen die Korrelationsergebnisse verglichen werden. Der Vergleich liefert Ausgangssignale, deren relative Größe zueinander frequenzabhängig die Peilung zum Ziel angibt.

Aus der DE-OS 33 22 500 ist ein Verfahren bekannt, bei dem Dispersionseigenschaften des Übertragungsmedium im Meßgebiet für die Messung ausgenutzt werden. In aller Regel besteht ein solches Übertragungsmedium aus einzelnen Schichten mit unterschiedlichen Übertragungseigenschaften für die vom Fahrzeug abgestrahlte Wellenenergie. In einer der Schichten sind als Meßanordnung mindestens zwei Wandler installiert, die die vom Fahrzeug abgestrahlte Wellenenergie in elektrische Empfangssignale umwandelt. Soll das erfindungsgemäße Verfahren in der Luftfahrt zur passiven Messung von Flugzeugdaten oder auf dem Land zum Vermessen von Landfahrzeugen, z.B. Panzern, eingesetzt werden, so werden als Wandler Mikrophone in Schichtungen der Atmosphäre oder Geophone in Bodenschichten eingesetzt, die die aufgrund des Fahrgeräusches abgestrahlte Schallenergie in der Übertragungsschicht am Meßort in elektrische Empfangssignale umwandeln. Das Verfahren kann ebenfalls eingesetzt werden, wenn das Fahrzeug elektromagnetische Wellen, z.B. Licht, abstrahlt, das in eine Übertragungsschicht mit Dispersionseigenschaften, z.B. Eisschichtungen, eindringt und sich dort ausbreitet. Besonders vorteilhaft ist das Verfahren zum passiven Erfassen der Zieldaten von Wasserfahrzeugen geeignet, bei dem zwei Hydrophone in einer Schicht des Wassers angeordnet werden. Im einfachsten Fall handelt es sich um einen Flachwasser-Schallübertracungskanal, bei dem die Wasserschicht durch Luft- und Bodenschichten begrenzt wird. Ebenso ist aber auch das Verfahren einzusetzen, wenn im Wasser mehrere Schichtungen mit unterschiedlichen Übertragungseigenschaften zu verzeichnen sind.

Es ist nach einem Aufsatz von C.L. Pekeris, "Theory of Propagagtion of Explosive Sound in Shallow Water", the Geological Society of America, Mamoir 27, 1948, und einem Buch von J. Tolstoy und C. S. Clay, "Ocean Acoustics: Theory and Experiment in Underwater Sound", Mc Graw-Hill Book Company, New York, 1966, bekannt, daß die Schallausbreitung einer im flachen Wasser befindlichen Geräuschquelle bei tiefen Frequenzen durch eine Überlagerung von Eigenwellen oder Moden beschrieben werden kann. Anschaulich kann man sich ein solches physikalisches Modell der Ausbreitung von Schall so vorstellen, daß der Schall im Flachwasser-Schallausbreitungskanal, im folgenden Flachwasserkanal genannt, an der Wasseroberfläche total und am Boden teilweise reflektiert wird, so daß sich eine zickzackförmige Ausbreitung ebener Wellenfronten über der Entfernung einstellt. Oberhalb einer kritischen Grenzfrequenz, die gleich der Wasserschallgeschwindigkeit geteilt durch die vierfache Höhe ist, bilden sich Eigenwellen oder sog. Moden aus. Die Anzahl der Eigenwellen ist abhängig von der Frequenz der abgestrahlten Schallenergie. Jeweils beim Überschreiten eines ungeraden Vielfachen der kritischen Grenzfrequenz kommt eine weitere Eigenwelle hinzu. Der Winkel, unter dem die Wellenfront an der Wasseroberfläche bzw. am Grund reflektiert wird, wächst mit der Ordnungszahl der Eigenwellen. Die Wellenfronten durchlaufen dann einen längeren Weg und stoßen häufiger an die Grenzschichten und erfahren dabei eine höhere Dämpfung.

Die Eigenwellen oder Moden stellen Lösungen einer partiellen Wellengleichung für den Flachwasserkanal dar. Genauer gesagt, sind es die Eigenfunktionen des Flachwasserkanals in horizontaler Richtung. Die Eigenwellen sind Zylinderwellen, die sich konzentrisch von der Schallquelle wegbewegen. Sie weisen in Ausbreitungsrichtung eine Periode auf, die um so geringer ist je höher die Frequenz der sich ausbreitenden Schallwelle ist. Die Ausbreitungsgeschwindigkeit der Eigenwelle bzw. ihre Phasengeschwindigkeit ist abhängig von der Frequenz des abgestrahlten Schalls und bei höheren Frequenzen größer. Der Schalldruckverlauf in vertikaler Richtung ist von der Ordnungszahl der Eigenwelle abhängig. An der Wasseroberfläche ist der Schalldruck gleich Null, am Boden weist er eine endliche Große auf, die Anzahl der dazwischen liegenden Nullstellen wird durch die Ordnungszahl bestimmt.

Durch Überlagerung mehrerer Eigenwellen entsteht im Flachwasserkanal ein Interferenzfeld. Dieses Interferenzfeld baut sich um die Schallquelle auf. In radialer Richtung zur Schallquelle sind räumliche Amplitudenschwankungen zu verzeichnen. Den Abstand zwischen z.B. gleichen Extremwerten nennt man Interferenzwellenlänge. Diese Interferenzwellenlänge ist allein abhängig von den Eigenschaften des Flachwasserkanals und der Frequenz des abgestrahlten Schalls, sie wird zu höheren Frequenzen hin größer.

Bei einem fahrenden Wasserfahrzeug wird Schall in einem breiten Frequenzbereich abgestrahlt und aufgrund der sich ausbildenden Eigenwellen entsteht im Flachwasserkanal ein Interferenzfeld. Dieses Interferenzfeld ist mit dem Wasserfahrzeug als Schallquelle verbunden.

In einem Aufsatz von Weston et al, "Interference of Wide-Band Sound in Shallow Water", Admiralty Research Laboratory, Taddington, Middlesex, 1971, reproduced by National Technical Information Service, wird ein Verfahren beschrieben, mit dem Übertragungseigenschaften eines Flachwasserkanals untersucht werden. Von einem ortsfesten Hydrophon wird ein breitbandiges Geräusch einer Schallquelle empfangen. Die Schallquelle bewegt sich dabei mit konstanter Geschwindigkeit und radialem, geradlinigem Kurs zunächst auf das Hydrophon zu und anschließend von ihm fort. Von dem Geräusch werden nacheinander je Zeiteinheit Frequenzspektren berechnet. Die Intensitäten dieser Frequenzspektren werden als Funktion der Frequenz spaltenweise in Grautonschrift dargestellt. In jede Spalte, die dem jeweiligen Abstand zwischen Hydrophon und Schallquelle zugeordnet ist, wird ein Frequenzspektrum eingetragen. Es ergibt sich ein Intensitätsmuster, das fächerformig zum Hydrophonort hinläuft Dieser Grautonschrieb spiegelt das Interferenzfeld wieder, das die Schallwellen des abgestrahlten Geräuschs aufgrund der Ausbreitung von Eigenwellen oder Moden hervorrufen.

Das mit dem Fahrzeug gekoppelte Interferenzfeld der sich im Übertragungsmedium ausbreitenden Moden wird bei dem in der o.g. DE-OS 33 22 500 genannten Verfahren von mindestens zwei Wandlern gemessen. Empfangssignale der Wandler werden einer Frequenzanalyse unterzogen und Intensitäten in Abhängigkeit von Meßzeit und Frequenz als Intensitätsmuster abgespeichert. Die Steigung von Interferenzlinien innerhalb des Intensitätsmusters, die aus benachbarten Intensitäten gleicher Stärke bestehen, und die Zeitverschiebung der Intensitätsmuster gegeneinander werden zusammen mit der Peilung, die durch Messung der Laufzeitverschiebung der Empfangssignale bestimmt wird, zur Ermittlung der Zieldaten verknüpft.

Die Interferenzlinien im Intensitätsmuster sind bei einem Kurs des Fahrzeugs, der über den Meßort führt, nahezu Geraden, die in einer Frequenz-Zeitebene fächerförmig verlaufen. Der Ursprung des Fächers ist dem Meßort zuzuordnen. Bei einem Vorbeilauf, bei dem der Kurs des Fahrzeugs einen Querabstand zum Meßort aufweist, ist eine hyperbelartige Struktur zu erkennen. Die Scheitelpunkte der Hyperbeln kennzeichnen die größte Annäherung an den Meßort. Ruht das Fahrzeug, so empfangen die Wandler je Frequenz einen bestimmten Pegel und es entsteht über der Zeit ein Streifenmuster aus Interferenzlinien längs den einzelnen Frequenzspuren. Fährt das Fahrzeug, so verändern sich die je Frequenz empfangenen Pegel über der Zeit. Die Interferenzlinien im Intensitätsmuster krümmen sich und ihre Steigung nimmt endliche Werte an. Man kann sich das so vorstellen, daß das Interferenzfeld durch konzentrische Kreise um das Fahrzeug herum charakterisiert ist, die die Minima bzw. Maxima der Interferenzwellen im Abstand der Interferenzwellenlänge kennzeichnen. Bei einer Kreisfahrt des Fahrzeugs erfaßt der Wandler jeweils ein und dieselbe Intensität des Interferenzfeldes. Verläuft der Kurs des Fahrzeugs über den Meßort und im Abstand am Meßort vorbei, so daß eine radiale Geschwindigkeitskomponente des Fahrzeugs zum Meßort weist, so sind zeitlich abwechselnd Minimum und Maximum der Intensitäten am Wandler feststellbar.

Grundvoraussetzung für den Einsatz des genannten Verfahrens ist eine Ausbreitung von Eigenwellen oder Moden im Meßgebiet, die immer dann gewährleistet ist, wenn das Übertragungsmedium Dispersionseigenschaften aufweist. Eine weitere Voraussetzung ist, daß bereits ein Ausschnitt des Interferenzmusters zur Verfügung steht. Dieser Ausschnitt umfaßt Frequenzspektren eines vorgebbaren Frequenzbereichs von nacheinander innerhalb eines vorgebbaren Zeitintervalls empfangenen Empfangssignalen.

Es ist Aufgabe der vorliegenden Erfindung ein Verfahren der eingangs genannten Art zu schaffen, bei dem schon nach einer geringeren Anzahl vorliegender Frequenzspektren Zieldaten bestimmt werden können und somit das Zeitintervall wesentlich verkürzt werden kann.

Diese Aufgabe wird erfindungsgemäß bei einem Verfahren der im Oberbegriff genannten Art durch die Merkmale im Kennzeichenteil des Anspruchs 1 gelöst.

Die Übertragungseigenschaften für die breitbandig vom Fahrzeug abgestrahlte Wellenenergie sind frequenzabhängig. Außerdem hängen sie von der Geometrie der Übertragungsschicht, vorzugsweise seiner Höhe ab, der Ausbreitungsgeschwindigkeit der Wellenenergie in der Übertragungsschicht und der Anzahl der sich ausbildenden miteinander interferierenden Moden. Die Übertragungseigenschaften werden durch die Phasengeschwindigkeiten der Moden oder die Interferenzwellenlänge des Interferenzfeldes charakterisiert, die ihrerseits beide wieder abhängig von der Frequenz der abgestrahlten Wellenenergie sind. Der Frequenzgang der Übertragungsschicht oder die Übertragungsfunktion der Übertragungsschicht ist ebenfalls frequenzabhängig und kann entweder durch die Interferenzwellenlänge oder die Phasengeschwindigkeit charakterisiert werden.

Außerdem ist sie abhängig von der Entfernung zwischen Meßort und der breitbandig Wellenenergie abstrahlenden Quelle. Eine Interferenzfrequenz des Interferenzfeldes, die ebenfalls frequenzabhängig ist, kann durch die Interferenzwellenlänge charakterisiert werden und ist von der Geschwindigkeit zwischen Quelle und Meßort abhängig. Frequenzgang oder Übertragungsfunktion und Interferenzfrequenz sind Übertragungseigenschaften der Übertragungsschicht, sie werden erfindungsgemäß mit vorgebbaren Zieldaten verknüpft und liefern Modellparameter. Die Zieldaten sind entweder quantisierte Entfernungen oder quantisierte Geschwindigkeiten.

Die Modellparameter werden erfindungsgemäß im Modellspeicher abgelegt und für einen Vergleich bereitgestellt. Aus den Empfangssignalen des Wandlers werden vorzugsweise zu äquidistanten Zeitpunkten jeweils Frequenzspektren gebildet und abgespeichert. Bei der Bestimmung des Abstandes zwischen Meßort und Fahrzeug als Zieldaten wird das Frequenzspektrum mit den Modellparametern, die für unterschiedliche Entfernungen gebildet wurden, verglichen. Bei Bestimmung der Geschwindigkeit als Zieldaten benötigt man mehrere Frequenzspektren, um daraus je Frequenz zeitabhängige Intensitätsverteilungen mit den Modellparametern, die für quantisierte Geschwindigkeiten im Modellspeicher abgelegt sind, zu vergleichen. Der besondere Vorteil des erfindungsgemäßen Verfahrens besteht darin, daß Entfernungsschätzung schon mit einem einzigen Frequenzspektrum und Geschwindigkeitsschätzung bei Erkennen eines zeitlichen Verlaufs der Intensitäten je Frequenz vorgenommen werden können, wobei ein Eigenverrat ausgeschlossen ist, da der Meßort ruht und das Verfahren rein passiv arbeitet.

Zahlreiche Messungen haben ergeben, daß sich die Strukturierung eines Interferenzmusters in der Wasserschalltechnik, insbesondere bei flachen Gewässern, wie der Ostsee oder der Nordsee, stets deutlich ausbildet und die Ausbreitung von Moden, insbesondere auch auf große Entfernung zu deutlichen Interferenzen führt, wobei ihre Anzahl mit der Entfernung abnimmt. Der Vorteil des erfindungsgemäßen Verfahrens nach Anspruch 1 besteht darin, daß ein einfaches Modell für die Übertragungsschicht bereits zu vernünftigen Abstands- und Geschwindigkeitsschätzungen führt. Der Aufwand für die Bestimmung der Modellparameter ist dadurch nicht groß. Außerdem ist von Vorteil, daß eine tiefenabhängige Struktur der Moden nicht berücksichtigt zu werden braucht, so daß nur das Empfangssignal in einer Höhe der Übertragungsschicht ausgewertet zu werden braucht. Aufwendige Modelle, die die Amplitudenverteilung der Eigenwelle über der Höhe berücksichtigen, sind nicht zu berechnen. Eine exakte Installation mehrerer über der Höhe angeordneter Wandler wird nicht benötigt.

Um den Abstand zwischen Meßort und Fahrzeug zu bestimmen, werden gemäß der vorteilhaften Weiterbildung nach Anspruch 2 die Übertragungsfunktionen der Übertragungsschicht innerhalb eines Frequenzbereichs ermittelt, der dem Frequenzbereich der vom Fahrzeug abgestrahlten Wellenenergie entspricht. Die Übertragungsfunktion oder der Frequenzgang der Übertragungsschicht ist außer von der Frequenz von der Entfernung zwischen Quelle und Meßort abhängig. Als Modellparameter werden im Modellspeicher die Übertragungsfunktionen für quantisierte Entfernungen abgelegt. Die Genauigkeit der Abstandsbestimmung ist abhängig von der Quantisierung der Entfernungen, sie ist unabhängig von der Entfernung selbst. Schon bei großen Entfernungen ist eine Schätzung möglich.

Bei einem Vergleich des Frequenzspektrums des momentanen Empfangssignals mit sämtlichen Übertragungsfunktionen, die für die vorgesehenen quantisierten Entfernungen im Modellspeicher vorliegen, wird festgestellt, welches Frequenzspektrum identisch mit derjenigen Übertragungsfunktion ist, die für eine Entfernung ermittelt und abgespeichert wurde, die gleich dem Abstand zwischen Meßort und Fahrzeug ist. Durch den Vergleich ist also unmittelbar die Entfernung bestimmbar. Der Vorteil des erfindungsgemäßen Verfahrens nach Anspruch 2 liegt insbesondere darin, daß schon mit einem einzigen Frequenzspektrum eine Entfernungsschätzung vorgenommen werden kann.

Besonders einfach und vorteilhaft ist dieser Vergleich gemäß der Weiterbildung des erfindungsgemäßen Verfahrens nach Anspruch 3 durch Korrelation des Frequenzspektrums mit sämtlichen Übertragungsfunktionen, wobei das Maximum der Korrelationsergebnisse die Entfernung liefert. Von Vorteil ist, daß Korrelationsrechnungen in der Rechnertechnik geläufige Routinen sind.

Eine Auswertung der Korrelationsergebnisse wird durch die Weiterbildung des erfindungsgemäßen Verfahrens nach Anspruch 4 besonders einfach. Die Korrelationsergebnisse werden waagerecht nebeneinander in Abhängigkeit von der Entfernung und untereinander in Abhängigkeit vom Zeitpunkt des Empfangs als Intensitätsschrieb aufgezeichnet. Es ergibt sich nach mehreren Messungen eine signifikante Entfernungsspur im Intensitätsschrieb, die durch zwei waagerecht liegende, ausgeprägte Minima und ein dazwischen liegendes Maximum gekennzeichnet ist und sich aus sämtlichen ebenfalls schwarz/weiß nebeneinander dargestellten Nebenmaxima und -minima der Korrelationsfunktionen aus dem Schwarz-/Weiß-Punktsschrieb deutlich hervorhebt. Bei einer Skalierung der entsprechenden waagerechten Koordinate in quantisierte Entfernungen ist der Abstand zwischen Fahrzeug und Meßort zu jedem Zeitpunkt an der Entfernungsspur gut ablesbar.

Nach einer vorteilhaften Weiterbildung des erfindungsgemäßen Verfahrens nach Anspruch 5 wird neben der Entfernung die Peilung zum Fahrzeug ermittelt. Am Meßort bilden mehrere Wandler eine Empfangsanlage mit Richtungsbildner. Die Wandler sind beispielsweise auf einer Zylinderbasis angeordnete Hydrophone einer Sonaranlage zum Bilden von Richtcharakteristiken. Der Vorteil besteht darin, daß ein Gruppensignal der Richtcharakteristik nicht nur die Peilung liefert, sondern gleichzeitig das Empfangssignal für das Frequenzspektrum bildet, das einen wesentlich größeren Störabstand hat als ein Empfangssignal bei Empfang mit einem einzigen ungerichteten Wandler. Die Reichweite des erfindungsgemäßen Verfahrens wird durch diese Maßnahme wesentlich verbessert. Ein zusätzlicher Aufwand zum Ausüben des Verfahrens ist nicht notwendig, da in Sonaranlagen ohnehin Signalverarbeitungen - wie Frequenzanalyse und Korrelationen - durchgeführt werden.

Es sind also nunmehr zwei Zieldaten bestimmbar geworden, nämlich die Entfernung zum Fahrzeug und seine Richtung als Peilwinkel gegenüber einer Referenzrichtung, beispielsweise gegenüber Nord. Mit diesen beiden Zieldaten ist die Position des Fahrzeugs bekannt.

Als nächstes benötigt man eine Angabe über die Geschwindigkeit des Fahrzeugs, die nach einer vorteilhaften Weiterbildung des erfindungsgemäßen Verfahrens nach Anspruch 6 ebenfalls durch Modellvergleich ermittelt wird. Die Modellparameter werden für unterschiedliche Geschwindigkeitskomponenten, die die quantisierten Zieldaten bilden, aus der frequenzabhängigen Interferenzwellenlänge des Interferenzfeldes bestimmt. Der Quotient aus Geschwindigkeitskomponente und Interferenzwellenlänge ist gleich einer Interferenzfrequenz und ebenfalls abhängig von der Frequenz der abgestrahlten Wellenenergie. Sobald ein zeitabhängiger Intensitätsverlauf der Frequenzspektren der Empfangssignale je Frequenz vorliegt, ist es möglich, einen periodischen Verlauf der Intensitätsverteilung des Interferenzmusters in Zeitrichtung für jede Frequenz zu ermitteln. Seine Periodizität ist gleich der geschwindigkeitsabhängigen Interferenzfrequenz bei der gleichen Frequenz. Durch Vergleich des Quotienten und der Periodizität wird je Frequenz die Geschwindigkeit bei Übereinstimmung gefunden. Durch die breitbandige Signalverarbeitung liegen gleichzeitig für alle im Frequenzbereich betrachteten Frequenzen Meßergebnisse vor, mit denen durch Mittelwertbildung eine Störbefreiung der Geschwindigkeitsbestimmung erstellt werden kann. Der Vorteil des erfindungsgemäßen Verfahrens nach Anspruch 6 besteht darin, daß Interferenzwellenlängen für jede Übertragungsschicht leicht bestimmbar oder Tabellen entnehmbar sind und auch hier ein einfacher Vergleich die Geschwindigkeitsbestimmung erlaubt. Diese Geschwindigkeit ist gleich der radialen Geschwindigkeitskomponente des Fahrzeugs, die aber wie bereits in der DE-OS 33 22 500 durch Verknüpfung mit der tangentialen Geschwindigkeitskomponente über den Satz des Pythagoras die Fahrzeuggeschwindigkeit liefert, wobei die tangentiale Geschwindigkeitskomponente aus der Entfernung und der zeitlichen Änderung der Peilung bestimmt wird.

Der Vorteil der erfindungsgemäßen Weiterbildung des Verfahrens nach Anspruch 7 besteht darin, daß die Interferenzfrequenz des von dem Fahrzeug erzeugten Interferenzfeldes durch Fouriertransformation der abgespeicherten Intensitätsverteilung über der Zeit je Frequenz in einfacher Weise mit den in der Rechnertechnik üblichen Mitteln bestimmt werden kann.

Zum Bestimmen der Modellparameter stellt die in Anspruch 8 angegebene vorteilhafte Weiterbildung des erfindungsgemäßen Verfahrens eine große Vereinfachung dar. Zieldatenbestimmungen haben gezeigt, daß es ausreicht, die Ausbreitung nur zweier Moden zu berücksichtigen. Da über weite Entfernungen Moden höherer Ordnung stark gedämpft werden und nicht mehr zur Ausbildung des Interferenzfeldes beitragen, ist durch dieses einfache Modell ein gewünschter Bereich bis zu großen Entfernungen hin in einfacher Weise abgedeckt.

Der Vorteil der erfindungsgemäßen Weiterbildung des Verfahrens nach Anspruch 9 besteht darin, daß schon eine Vereinfachung der Übertragungsfunktion durch eine Approximation an eine Kosinusfunktion für quantisierte Entfernungen geeignet ist, als Modellparameter benutzt zu werden. Besonders vorteilhaft ist es, die Differenz der Reziprokwerte der Phasengeschwindigkeiten der beiden Moden oder die Interferenzwellenlänge je Frequenz zu tabellieren, da sie die Übertragungseigenschaften der Übertragungsschicht charakterisieren und daraus sowohl die Modellparameter für die Entfernungsbestimmung als auch für die Geschwindigkeitsbestimmung abgeleitet werden können.

Wenn davon auszugehen ist, daß die Übertragungsschicht unterschiedliche Höhen ausweist, werden gemäß Anspruch 10 die Modellparameter für unterschiedliche Höhen berechnet und abhängig vom Meßort die entsprechenden Modellparameter aus dem Modellspeicher abgerufen.

Gemäß der vorteilhaften Weiterbildung des erfindungsgemäßen Verfahrens nach Anspruch 11 ist die Bestimmung der Modellparameter ebenso durch Messungen einfach möglich, indem in dem jeweiligen Meßgebiet, bevor das erfindungsgemäße Verfahren dort ausgeübt wird, ein Fahrzeug als Quelle operiert. Das Fahrzeug fährt mit jeweils konstanter Geschwindigkeit einen geraden Kurs über den Meßort, wobei die Frequenzspektren am Meßort bestimmt und frequenzabhängige Übertragungsfunktionen liefern, die je quantisierter Entfernung als Modellparameter abgespeichert werden. Zum Bestimmen des Quotienten aus Interferenzwellenlänge und Geschwindigkeit werden jeweils mit konstanter, aber anderer Geschwindigkeit Meßfahrten über den Meßort zurücklegt.

Besonders vorteilhaft ist die Weiterbildung des erfindungsgemäßen Verfahrens nach Anspruch 12, wenn

5

EP 0 412 248 B1

der Meßort sich auf einem Schiff befindet und Modellparameter für unterschiedliche Meßgebiete jeweils abhängig vom Meßort abrufbar sind.

Die Wirkungsweise des erfindungsgemäßen Verfahrens ist hier vorzugsweise für die Anwendung in der Wasserschalltechnik beschrieben. In gleicher Weise sind passive Messungen der Zieldaten eines Fahrzeugs bei der Überwachung von Straßen an Land und in der Luft in Gebieten möglich, wo Schallwellen des Fahrgeräuschs in Boden- oder Luftschichten mit Dispersionseigenschaften eindringen und sich Moden ausbilden.

Vorrichtungen zum passiven Bestimmen des Abstands eines breitbandig selbstgenerierte Wellenenergie abstrahlenden Fahrzeugs, entsprechend dem Oberbegriff des Anspruchs 13, zum Ausüben des erfindungsgemäßen Verfahrens sind in den Ansprüchen 13 bis 15 angegeben. Vorrichtungen zum passiven Bestimmen der Geschwindigkeit eines breitbandig selbstgenerierte Wellenenergie abstrahlenden Fahrzeugs, entsprechend dem Oberbegriff des Anspruchs 16, zum Ausüben des erfindungsgemäßen Verfahrens sind in den Ansprüchen 16 und 17 beschrieben.

Die Vorteile dieser Vorrichtungen bestehen insbesondere darin, daß die für eine Bestimmung der Zieldaten notwendigen Schaltungen üblicherweise in jeder Empfangsanlage in der Peiltechnik eingesetzt werden. Es handelt sich hier um Rechenschaltungen zur Frequenzanalyse, z.B. mit Hilfe der Fast-Fourieranalyse, und Speicherschaltungen, in denen Frequenzspektren zeitabhängig abgespeichert werden. Der Modellspeicher ist ein in der Rechnertechnik üblicher Speicher zum Ein- und Auslesen der Modellparameter. Als Vergleichsschaltungen sind besonders vorteilhaft Korrelatoren einsetzbar, die in der Peiltechnik für Störbefreiungsaufgaben üblich sind.

Die Erfindung ist anhand von in der Zeichnung dargestellten Ausführungsbeispielen für ein Verfahren zum passiven Bestimmen der Zieldaten eines Fahrzeugs nachfolgend näher beschrieben. Es zeigen:
Fig. 1     ein Blockschaltbild einer Sonaranlage zum Bestimmen von Zieldaten eines Wasserfahrzeugs,
Fig. 2     einen Intensitätsschrieb eines Interferenzfeldes,
Fig. 3     Übertragungsfunktionen für quantisierte Entfernungen,
Fig. 4     eine Entfernungsspur in einem Intensitätsschrieb,
Fig. 5     den Verlauf des Schalldrucks bei der Interferenz zweier Moden über der Entfernung und
Fig. 6     ein Diagramm, das die Interferenzwellenlänge über der Frequenz in Abhängigkeit von unterschiedlichen Wasserschallgeschwindigkeiten zeigt.

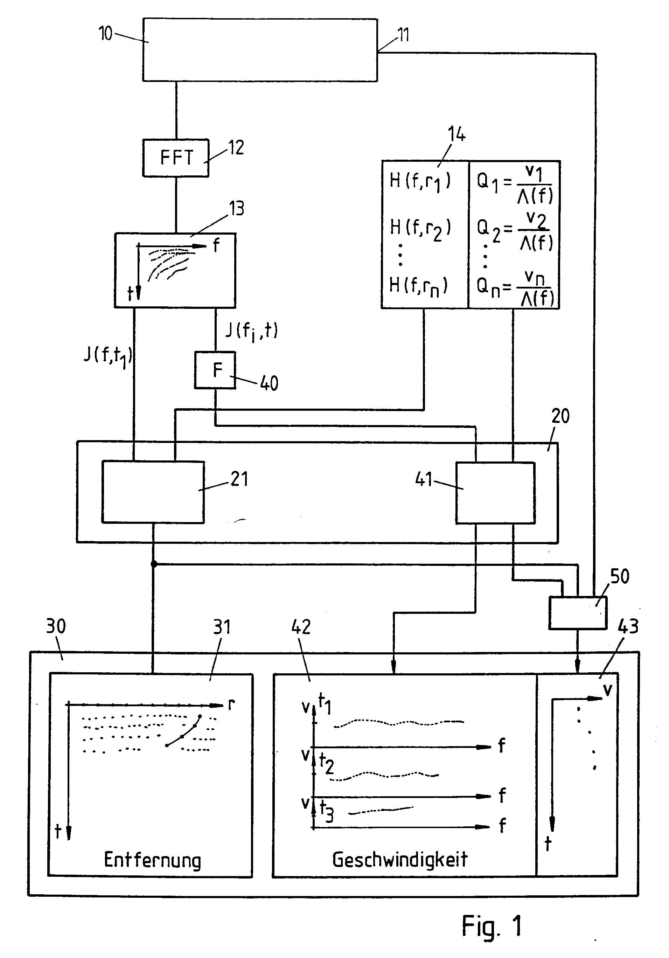

Fig. 1 zeigt ein Blockschaltbild für eine Sonaranlage zum Bestimmen von Zieldaten eines Wasserfahrzeugs mit Hilfe des erfindungsgemäßen Verfahrens. Das Wasserfahrzeug strahlt durch seine Antriebsaggregate, vorzugsweise bei Fahrt, Wellenenergie ab, die von einer Empfangsanlage 10 breitbandig empfangen wird. Die Empfangsanlage 10 weist mindestens einen elektroakustischen Wandler oder eine Empfangsbasis mit Richtungsbildner zum Bilden von horizontal eng benachbarten Richtcharakteristiken großer Bündelung auf, deren Ausgangssignal 11 Peilungen zum Wasserfahrzeug angibt. Das Empfangssignal der Empfangsanlage 10 wird in einer Rechenschaltung 12 zur Frequenzanalyse zu äquidistanten Zeitpunkten mit Hilfe der Fast-Fourier-Transformation in ein Frequenzspektrum umgewandelt. Der Rechenschaltung 12 ist eine Speicherschaltung 13 nachgeordnet, die abhängig vom Zeitpunkt des Empfangs die Frequenzspektren über der Frequenz abspeichert. In der Speicherschaltung 13 entsteht ein Abbild des empfangenen Interferenzfeldes in Form von Intensitätsverteilungen in Abhängigkeit von Frequenz und Zeit.

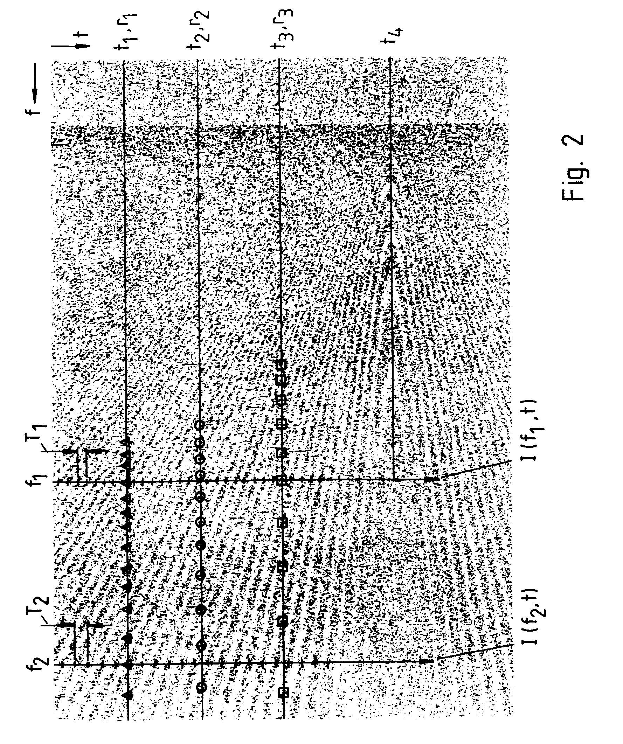

Fig. 2 zeigt einen Intensitätsschrieb eines solchen Interferenzfeldes. Sein Ursprung ist oben rechts, die Ordinate ist mit Frequenzen, die Abszisse mit Zeitpunkten des Empfangs skaliert. Man sieht einen hyperbelartigen Verlauf von Interferenzlinien, die durch waagerechte Intensitätsschriebe der Frequenzspektren zu äquidistanten Zeitpunkten zustande kommt. Zum Zeitpunkt $t_1$ erhält man eine Intensitätsverteilung über der Frequenz, deren Extrema durch die eingezeichneten Dreiecke deutlich hervorgehoben werden. Man sieht, daß die Extrema der Intensitätsverteilung zu höheren Frequenzen hin größere Abstände zueinander aufweisen. Aus dem Intensitätsmuster ist zu entnehmen, daß das Wasserfahrzeug den Meßort zum Zeitpunkt $t_4$ mit Querabstand passiert hat.

Das zum Zeitpunkt $t_1$ erstellte Frequenzspektrum wird mit Modellparametern in einem Modellspeicher 14 verglichen.

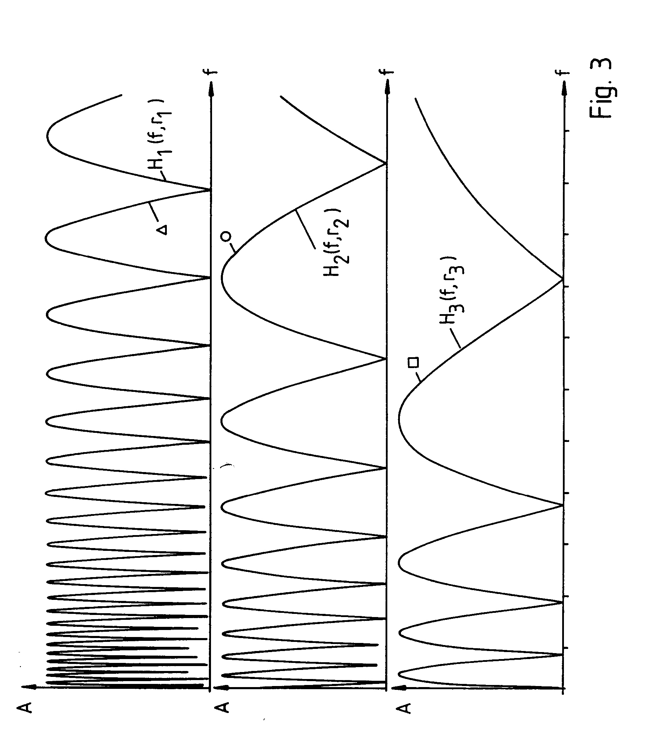

Im Modellspeicher 14 sind Übertragungsfunktionen $H(f,r_1)$; $H(f,r_2)$, ..., $H(f,r_n)$ abgespeichert, die für unterschiedliche Entfernungen $r_1$, $r_2$, $r_n$ den Frequenzgang der Übertragungsschicht wiedergeben. Fig. 3 zeigt übereinander solche Übertragungsfunktionen $H$ für die Entfernungen $r_1$, $r_2$ und $r_3$ über der Frequenz f bei einer Ausbreitung von zwei Moden in einem Flachwasserkanal mit einer Wassertiefe von 30 m und einer Schallgeschwindigkeit von 1500 m/s. Die Übertragungsfunktion ist durch eine Kosinusfunktion approximiert und lautet

$$H(f,r) = 2 \cos \frac{\pi r}{\Lambda(f)} = 2 \cos \pi r \left[\frac{1}{c_i} - \frac{1}{c_v}\right]$$

wobei $\Lambda(f)$ die Interferenzwellenlänge und $c_i$, $c_v$ die Phasengeschwindigkeiten der i. und v. Mode sind. Die in Fig. 3 oben angegebene Übertragungsfunktion $H(f,r_i)$ gibt das Übertragungsverhalten des Übertragungska-

6

nals für eine Entfernung $r_1$ zwischen Quelle und Meßort an, wobei $r_1$ größer als $r_2$ und $r_3$ kleiner als $r_2$ ist. Der Nullstellenabstand der Übertragungsfunktionen $H(f,r_1)$ wird mit kleiner werdender Entfernung $r_i$ größer. Genau das gleiche ist Fig. 2 zu entnehmen. Zur Verdeutlichung sind Extrema der frequenzabhängigen Intensitätsverteilungen durch Dreiecke beim Zeitpunkt $t_1$, Kreise beim Zeitpunkt $t_2$ und durch Quadrate beim Zeitpunkt $t_3$, die den Entfernungen $r_1$, $r_2$, $r_3$ entsprechen, gekennzeichnet worden.

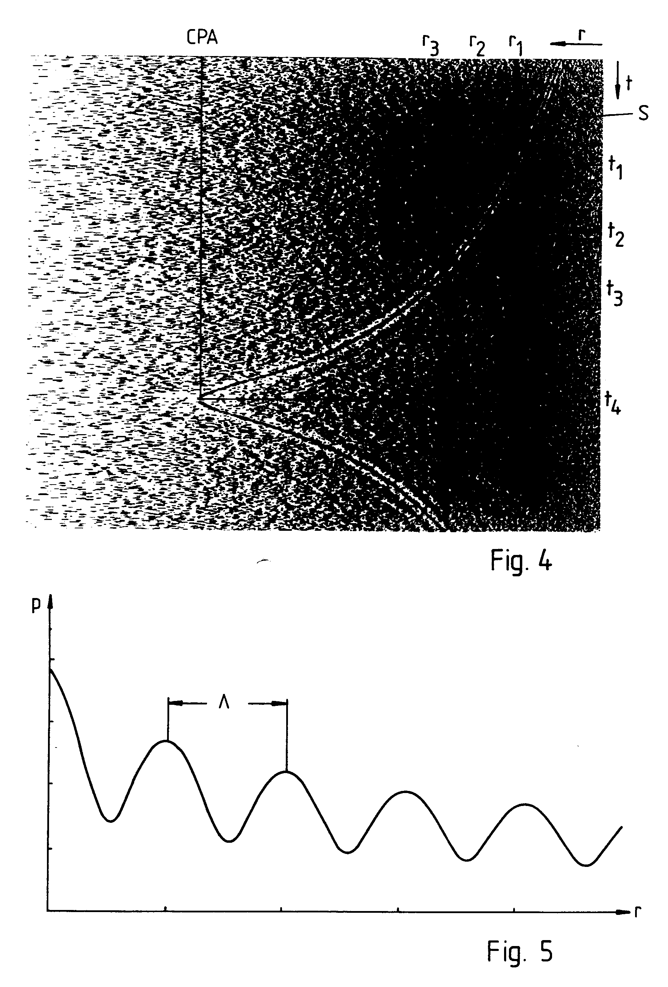

Gemäß Fig. 1 ist der Speicherschaltung 13 und dem Modellspeicher 14 eine Vergleichsschaltung 20 nachgeordnet. Sie enthält einen Korrelator 21, in dem die waagerecht in Fig. 2 eingetragenen Frequenzspektren aus der Speicherschaltung 13 mit sämtlichen Übertragungsfunktionen $H(f,r_1)$, $H(f,r_2)$, ..., $H(f,r_n)$ aus dem Mo- dellspeicher 14 verglichen werden. Die Korrelationsergebnisse werden in einer nachgeordneten Anzeigeanordnung 30 als Intensitätsschrieb 31 über der Entfernung r und dem Zeitpunkt t dargestellt. Ein solcher Intensitätsschrieb 31 ist in Fig. 4 genauer dargestellt. Er zeigt den Vorbeilauf des Wasserfahrzeugs am Meßort. Die Ordinate ist in Entfernungen $r_i$, die Abszisse in Zeitpunkte $t_i$ skaliert. Man sieht deutlich eine schwarze Entfernungsspur S, die sich signifikant durch die sie umgebende Weißfärbung aus dem Intensitätsschrieb her- aushebt. Zum Zeitpunkt $t_1$ befindet sich das Wasserfahrzeug im Abstand $r_1$, zum Zeitpunkt $t_2$ im Abstand $r_2$ und zum Zeitpunkt $t_3$ im Abstand $r_3$ zum Meßort. Die Spitze der Entfernungsspur S kennzeichnet die größte Annäherung an den Meßort zum Zeitpunkt $t_4$. Die Intensitätsverteilung auf diesem Schrieb gibt waagerecht Hauptmaximum und Nebenextrema der Korrelationsergebnisse für die Vergleiche des Frequenzspektrums zum Zeitpunkt $t_i$ mit sämtlichen Übertragungsfunktionen $H(f,r_i)$ für die einzelnen quantisierten Entfernungen $r_i$ wieder. Man sieht deutlich, daß es nicht nur ein Maximum, sondern viele Nebenextrema gibt, wobei aber das Hauptmaximum durch deutliche danebenliegende Minima herausgehoben wird.

Außerdem ist der Speicherschaltung 13 eine Schaltung 40 zur Fourier-Transformation der zeitabhängigen Intensitätsverteilung $I(f_1,t)$, $I(f_2,t)$, ..., $I(f_n,t)$ je Frequenz f nachgeordnet. Ihr Verlauf ist den Senkrechten in Fig. 2 bei den Frequenzen $f_1$ und $f_2$ entnehmbar. Man sieht, daß die Intensitätsextrema bei der Frequenz $f_1$ einen zeitlichen, periodischen Abstand $T_1$, bei der Frequenz $f_2$ einen zeitlichen, periodischen Abstand $T_2$, der größer ist als der zeitliche Abstand $T_1$, aufweisen. Der Reziprokwert des zeitlichen Abstands $T_1$, $T_2$ gibt eine Interfe- renzfrequenz des Interferenzfeldes an, die geschwindigkeitsabhängig ist.

Im Modellspeicher 14 sind als Modellparameter Quotienten

$$\frac{1}{T_i} = Q_i = \frac{v_i}{\Lambda(f)}$$

für quantisierte Geschwindigkeitskomponenten $v_1$, $v_2$, ... $v_n$ bezogen auf die frequenzabhängige Interferenz- wellenlänge $\Lambda(f)$ abgelegt.

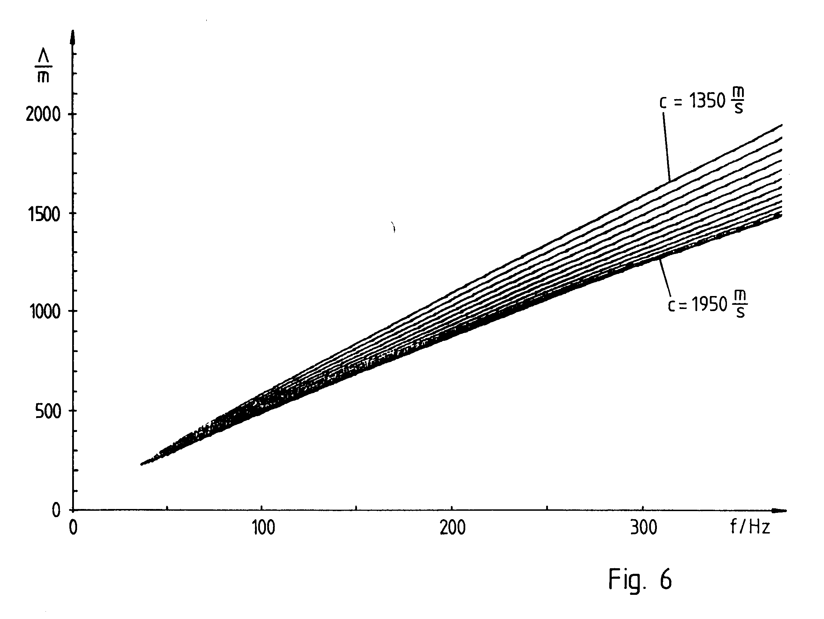

Fig. 5 zeigt beispielhaft den Verlauf des Schalldrucks p bei der Interferenz zweier Moden über der Entfernung r, mit der Interferenzwellenlänge $\Lambda$ zwischen zwei Extrema. Die Abhängigkeit der Interferenzwellen- länge $\Lambda(f)$ von der Frequenz f ist Fig. 6 zu entnehmen, wobei die Kurven mit unterschiedlichen Wasserschallgeschwindigkeiten C[m/s] parametriert sind. Diese Kurven werden benötigt, um die Quotienten $Q_1$, $Q_2$ bis $Q_n$ für quantisierte Geschwindigkeitskomponenten $v_1$, $v_2$, ..., $v_n$ zu berechnen, die im Modellspeicher 14 abgelegt sind. Dem Modellspeicher 14 und der Schaltung 40 zum Bilden der Fast-Fourier-Transformation ist eine Multiplizierschaltung 41 in der Vergleichsschaltung 20 nachgeordnet, in der der Quotient $Q_1$, $Q_2$, ..., mit der für die einzelnen Frequenzen $f_1$, $f_2$, $f_3$ in der Schaltung 40 ermittelten Interferenzfrequenzen verglichen werden. Bei Gleichheit ist die Geschwindigkeit v in Richtung zwischen Wasserfahrzeug und Meßort gefunden.

In der nachgeordneten Anzeigeanordnung 30 ist in einem Feld 42 jeweils die ermittelte Geschwindigkeit v über der Frequenz zu den Zeitpunkten $t_1$, $t_2$, $t_3$ angegeben, die nach einer Mittelwertbildung in einer der Vergleichsschaltung 41 nachgeordneten Geschwindigkeitsberechnungsschaltung 50 mit der zugehörigen ermittelten Entfernung r und zeitlichen Änderung der Peilung die resultierende Geschwindigkeit V des Fahrzeugs ergibt, die auf einem Anzeigefeld 43 in Abhängigkeit von der Zeit t dargestellt ist.

## Patentansprüche

1. Verfahren zum passiven Bestimmen der Zieldaten (r, v) eines breitbandig selbstgenerierte Wellenenergie abstrahlenden Fahrzeugs, insbesondere Wasserfahrzeugs, bei dem innerhalb eines Meßgebiets mindestens ein Wandler (10) zum Empfangen der Wellenenergie in einer Übertragungsschicht mit Dispersionseigenschaften angeordnet ist und Frequenzspektren von Empfangssignalen des Wandlers (10) zu vorgebbaren Zeitpunkten gebildet werden und ihre Intensitäten in Abhängigkeit von der Frequenz (f) und dem Zeitpunkt (t) abgespeichert werden, dadurch gekennzeichnet, daß Übertragungseigenschaften ($H$, $T_i$) für eine Ausbreitung der von einer Quelle breitbandig abgestrahlten Wellenenergie in Form von Moden in der Übertragungsschicht in Abhängigkeit von der Frequenz (f) für vorgebbar quantisierte Zieldaten ($r_i$, $v_i$) be-

stimmt und zusammen mit den quantisierten Zieldaten ($r_i$, $v_i$) als Modellparameter (H, $Q_i$) in einem Modellspeicher (14) abgelegt werden, daß die frequenz- und/oder zeitabhängigen Intensitätsverteilungen (I) der Frequenzspektren mit den Modellparametern verglichen werden und bei Übereinstimmung Abstand zum Meßort und/oder Geschwindigkeit als Zieldaten (r, v) des Fahrzeugs bestimmt sind.

2. Verfahren nach Anspruch 1 zum Bestimmen des Abstands, dadurch gekennzeichnet, daß als Modellparameter Übertragungsfunktionen (H) für die Ausbreitung der Moden für unterschiedliche Entfernungen ($r_i$) zwischen Meßort und Quelle, die die quantisierten Zieldaten ($r_i$) bilden, in Abhängigkeit von der Frequenz (f) bestimmt werden, daß sämtliche im Modellspeicher (14) abgespeicherten Übertragungsfunktionen (H) mit der frequenzabhängigen Intensitätsverteilung (I) des Frequenzspektrums des momentan empfangenen Empfangssignals verglichen werden und daß bei Übereinstimmung die zu der Übertragungsfunktion (H) gehörige Entfernung ($r_1$) den Abstand angibt.

3. Verfahren nach Anspruch 2, dadurch gekennzeichnet, daß für den Vergleich das momentane Frequenzspektrum mit sämtlichen Übertragungsfunktionen (H) korreliert wird und die Korrelationsergebnisse miteinander verglichen werden und der Abstand gleich derjenigen Entfernung ($r_1$) ist, bei dem das Korrelationsergebnis am größten ist.

4. Verfahren nach Anspruch 3, dadurch gekennzeichnet, daß alle Korrelationsergebnisse als Intensitätsschrieb (31) über der Entfernung (r) aufgezeichnet werden.

5. Verfahren nach einem der Ansprüche 1 bis 4, dadurch gekennzeichnet, daß am Meßort mehrere Wandler zu einer Empfangsanlage (10) zusammengefaßt werden, die zum Peilen in einer Ebene parallel zur Übertragungsschicht ausgebildet ist und das Empfangssignal liefert.

6. Verfahren nach Anspruch 1 zum Bestimmen der Geschwindigkeit, durch gekennzeichnet, daß Interferenzwellenlängen ($\Lambda$) für eine Ausbreitung von mindestens zwei Moden in der Übertragungsschicht für unterschiedliche Geschwindigkeitskomponenten ($v_i$) zwischen Meßort und Quelle, die die quantisierten Zieldaten ($v_i$) bilden, in Abhängigkeit von der Frequenz (f) bestimmt werden, daß je Frequenz (f) Quotienten ($Q_i$) aus Interferenzwellenlänge ($\Lambda$) und den Geschwindigkeitskomponenten ($v_i$) oder umgekehrt gebildet werden und die Modellparameter bilden, daß aus den abgespeicherten, zeitabhängigen Intensitätsverteilungen (I) je Frequenz ($f_i$) ein periodischer zeitlicher Abstand ($T_i$) aufeinanderfolgender Intensitätsmaxima als Interferenzfrequenz bestimmt wird und mit den abgespeicherten Quotienten ($Q_i$) verglichen wird und daß bei Übereinstimmung die zugehörige Geschwindigkeitskomponente ($v_i$) die Geschwindigkeit des Fahrzeugs bezüglich des Meßorts angibt.

7. Verfahren nach Anspruch 6, dadurch gekennzeichnet, daß der periodische zeitliche Abstand ($T_i$) durch Fourier-Transformation der zeitabhängigen Intensitätsverteilungen (I) bestimmt wird.

8. Verfahren nach einem der Ansprüche 1 bis 6, dadurch gekennzeichnet, daß die Modellparameter für eine Ausbreitung von zwei Moden in einer Übertragungsschicht konstanter Höhe berechnet werden.

9. Verfahren nach Anspruch 8, dadurch gekennzeichnet, daß die Modellparameter für die Abstandsbestimmung durch Kosinusfunktionen approximiert werden, deren Argument gleich dem Produkt aus den mit dem Faktor $\pi$ multiplizierten jeweiligen Entfernungen (r) und dem Reziprokwert der frequenzabhängigen Interferenzwellenlänge ($\Lambda$) ist.

10. Verfahren nach einem der Ansprüche 1 bis 9, dadurch gekennzeichnet, daß die Modellparameter für unterschiedliche Höhen der Übertragungsschicht berechnet werden.

11. Verfahren nach einem der Ansprüche 1 bis 6, dadurch gekennzeichnet, daß die Übertragungseigenschaften (H, T) im Meßgebiet gemessen werden und die Quelle ein Fahrzeug ist, dessen Kurs über dem Meßort und/oder mit Querabstand zum Meßort verläuft, und aus den gemessenen Übertragungseigenschaften (H, T) die Modellparameter (H, $Q_i$) berechnet werden.

12. Verfahren nach einem der Ansprüche 1 bis 11, dadurch gekennzeichnet, daß der Modellspeicher (14) fest einprogrammierte, vom Meßgebiet abhängige Modellparameter (H, $Q_i$) aufweist.

13. Vorrichtung zum passiven Bestimmen des Abstands eines breitbandig selbstgenerierte Wellenenergie abstrahlenden Fahrzeugs unter Verwendung mindestens eines Wandlers (10) zum Empfangen der Wellenenergie in einer Übertragungsschicht mit Dispersionseigenschaften, einer nachgeschalteten Rechenschaltung (12) zur Frequenzanalyse, und einer Speicherschaltung (13) zum Abspeichern von in der Rechenschaltung (12) gebildeten Frequenzspektren der Empfangssignale in Abhängigkeit von Frequenz (f) und Zeit (t) und zum Auslesen von frequenzabhängigen und/oder zeitabhängigen Intensitätsverteilungen (I) der abgespeicherten Frequenzspektren, die von einem Taktgeber zu vorgebbaren Zeitpunkten ansteuerbar sind, dadurch gekennzeichnet, daß frequenzabhängige Übertragungsfunktionen (H) für vorgebbar quantisierte Entfernungen ($r_i$), die von einer Rechneranordnung zum Bestimmen der Übertragungseigenschaften für eine Ausbreitung der von einer Quelle breitbandig abgestrahlten Wellenenergie in Form von Moden berechnet sind, in einem Modellspeicher als Modellparameter abgespeichert sind und nacheinander ausgebbar sind, daß die Speicherschaltung (13) und der Modellspeicher (14) mit einer Vergleichsschaltung (20) verbunden sind zum Vergleich sämtlicher im Modellspeicher (14) abgespeicherten Übertragungsfunktionen (H) mit der frequenzabhängigen Intensitätsverteilung (I) des Frequenzspektrums des momentanen empfangenen Empfangssignals, daß der Vergleichsschaltung (20) eine Anzeigeanordnung (30) für das Vergleichsergebnis in Abhängigkeit von der Entfernung ($r_i$) nachgeordnet ist und daß bei einer Übereinstimmung der Intensitätsverteilung (I) des Frequenzspektrums mit einer der Übertragungsfunktionen (H) die zu der Übertragungsfunktion (H) gehörige Entfernung ($r_i$) den Abstand des Fahrzeugs zum Meßort angibt.

14. Vorrichtung nach Anspruch 13, dadurch gekennzeichnet, daß die Vergleichsschaltung (20) einen Korrelator (21) enthält.

15. Vorrichtung nach Anspruch 14, dadurch gekennzeichnet, daß die Anzeigeanordnung (30) zum Darstellen der Korrelationsergebnisse über der Entfernung ($r_i$) als Intensitätsschrieb (31) ausgebildet ist.

16. Vorrichtung zum passiven Bestimmen der Geschwindigkeit eines breitbandig selbstgenerierte Wellenenergie abstrahlenden Fahrzeugs unter Verwendung mindestens eines Wandlers (10) zum Empfang der Wellenenergie in einer Übertragungsschicht mit Dispersionseigenschaften und einer nachgeschalteten Rechenschaltung (12) zur Frequenzanalyse und einer Speicherschaltung zum Abspeichern von in der Rechenschaltung (12) gebildeten Frequenzspektren der Empfangssignale in Abhängigkeit von Frequenz (f) und Zeit (t) und zum Auslesen von frequenzabhängigen und/oder zeitabhängigen Intensitätsverteilungen (I) der abgespeicherten Frequenzspektren, die von einem Taktgeber zu vorgebbaren Zeitpunkten ansteuerbar sind, dadurch gekennzeichnet, daß Quotienten ($Q_i$) aus frequenzabhängigen Interferenzwellenlängen ($\Lambda$), die von einer Rechneranordnung zum Bestimmen der Übertragungseigenschaften für eine Ausbreitung von mindestens zwei Moden der von einer Quelle breitbandig abgestrahlten Wellenenergie berechnet sind, und vorgebbaren quantisierten Geschwindigkeitskomponenten ($v_i$) als Modellparameter in einem Modellspeicher (14) abgespeichert sind und nacheinander ausgebbar sind, daß aus der Speicherschaltung (13) je Frequenz ($f_i$) zeitabhängige Intensitäten (I, t) ausgebbar sind, daß der Speicherschaltung (13) eine Schaltung (40) zur Fourier-Transformation nachgeordnet ist zum Bestimmen eines zeitlichen Abstands ($T_1$) aufeinanderfolgender Intensitätsmaxima aus den abgespeicherten, zeitabhängigen Intensitätsverteilungen (I) je Frequenz als Interferenzfrequenz, daß die Schaltung (40) zur Fourier-Transformation und der Modellspeicher (14) mit einer Vergleichsschaltung (20) zum Vergleichen der Interferenzfrequenz mit den abgespeicherten Quotienten ($Q_i$) verbunden sind, daß der Vergleichsschaltung (20) eine Anzeigeanordnung (30) für das Vergleichsergebnis in Abhängigkeit von der Geschwindigkeit nachgeordnet ist und daß bei Übereinstimmung der Interferenzfrequenz mit einem der abgespeicherten Quotienten ($Q_i$) die zugehörige Geschwindigkeitskomponente ($v_1$) die Geschwindigkeit des Fahrzeugs bezüglich des Meßorts angibt.

17. Vorrichtung nach Anspruch 16, dadurch gekennzeichnet, daß die Vergleichsschaltung (20) als Multiplizierschaltung (41) zum Bilden des Produkts aus Quotient ($Q_i$) und Reziprokwert des zeitlichen Abstands ($T_i$) mit Mittelwertbildner ausgebildet ist.

## Claims

1. Method of passive determination of the target data (r, v) of a vehicle, especially a water vehicle, radiating broad-band self-generated wave energy, the method being such that, within a measurement area, there is at least one transducer (10) to receive the wave energy in a propagation layer with dispersion properties, and frequency spectra are formed from reception signals of the transducer (10) at prespecifiable times and their intensities are stored versus the frequency (f) and the time (t), characterised in that transmission properties $(H, T_i)$ for propagation of the wave energy radiated in a broad band by a source in the form of modes in the propagation layer are determined versus the frequency (f) for prespecifiably quantised target data $(r_i, v_i)$ and are stored together with the quantised target data $(r_i, v_i)$ as model parameters $(H, Q_i)$ in a model memory (14), that the frequency-dependent and/or time-dependent intensity distributions (I) of the frequency spectra are compared with the model parameters and, in the case of agreement, the range from the measurement location and/or the speed are determined as target data (r, v) of the vehicle.

2. Method in accordance with Claim 1 to determine the range, characterised in that, as model parameters, transmission functions (H) for the propagation of the modes for different distances $(r_i)$ between measurement location and source which form the quantised target data $(r_i)$ are determined versus the frequency (f), that all transmission functions (H) stored in the model memory (14) are compared with the frequency-dependent intensity distribution (I) of the frequency spectrum of the reception signal currently being received, and that, in the case of agreement, the distance $(r_1)$ belonging to the transmission function (H) represents the range.

3. Method in accordance with Claim 2, characterised in that, for the comparison, the current frequency spectrum is correlated with all transmission functions (H) and the correlation results are compared with one another and the range is equal to that distance $(r_1)$ for which the correlation result is the greatest.

4. Method in accordance with Claim 3, characterised in that all correlation results are recorded as a recording (31) of intensity versus distance (r).

5. Method in accordance with any of the Claims 1 to 4, characterised in that, at the measurement location, several transducers are combined to form a receiving system (10) which is designed for bearing-measurement in a plane parallel to the propagation layer and supplies the reception signal.

6. Method in accordance with Claim 1 to determine the speed, characterised in that interference wavelengths $(\Lambda)$ are determined versus frequency (f) for propagation of at least two modes in the propagation layer for different velocity components $(v_i)$ between measurement location and source, which form the quantised target data $(v_i)$, that for each frequency (f) quotients $(Q_i)$ of the interference wavelength $(\Lambda)$ and the velocity components $(v_i)$ or vice versa are formed and form the model parameters, that from the stored, time-dependent intensity distributions (I) per frequency $(f_i)$ a periodic time-interval $(T_i)$ between consecutive intensity maxima is determined as the interference frequency $(1/T_i)$ and is compared with the stored quotients $(Q_i)$ and that, in the case of agreement, the associated velocity component $(v_i)$ represents the speed of the vehicle relative to the measurement location.

7. Method in accordance with Claim 6, characterised in that the periodic time-interval $(T_i)$ is determined by Fourier transformation of the time-dependent intensity distributions (I).

8. Method in accordance with any of the Claims 1 to 6, characterised in that the model parameters for propagation of two modes in a propagation layer of constant height are calculated.

9. Method in accordance with Claim 8, characterised in that the model parameters for the range determination are approximated by cosine functions whose arguments are equal to the product of the distances (r), multiplied by the factor $\pi$, and the reciprocal of the frequency-dependent interference wavelength $(\Lambda)$.

10. Method in accordance with any of the Claims 1 to 9, characterised in that the model parameters are calculated for different heights of the propagation layer.

11. Method in accordance with any of the Claims 1 to 6, characterised in that the transmission properties (H, T) in the measurement area are measured and the source is a vehicle whose course passes directly over the measurement location and/or is at a lateral distance from the measurement location, and the model parameters $(H, Q_i)$ are calculated from the measured transmission properties (H, T).

12. Method in accordance with any of the Claims 1 to 11, characterised in that the model memory (14) contains permanently programmed model parameters $(H, Q_i)$ which depend on the measurement area.

13. Device for passive determination of the range of a vehicle radiating broad-band self-generated wave energy, using at least one transducer (10) to receive the wave energy in a propagation layer with dispersion properties, a following computing circuit (12) for frequency analysis and a memory circuit (13) for the storage of reception signal frequency spectra formed in the computing circuit (12) versus frequency (f) and time (t) and for the read-out of frequency-dependent and/or time-dependent intensity distributions (I) of the stored frequency spectra, which are drivable by a clock generator at prespecifiable times, characterised in that frequency-dependent transmission functions (H) for prespecifiably quantised distances ($r_i$), which are computed by a computer arrangement for determination of the transmission properties for propagation of the broad-band wave energy radiated by a source in the form of modes, are stored as model parameters in a model memory and are outputable one after another, that the memory circuit (13) and the model memory (14) are connected to a comparator circuit (20) for comparison of all transmission functions (H) stored in the model memory (14) with the frequency-dependent intensity distribution (I) of the frequency spectrum of the reception signal currently being received, that the comparator circuit (20) is followed by a display arrangement (30) for displaying the comparison result versus distance ($r_i$) and that, in the case of agreement of the intensity distribution (I) of the frequency spectrum with one of the transmission functions (H), the distance ($r_i$) belonging to the transmission function (H) represents the range ($r_i$) of the vehicle relative to the measurement location.

14. Device in accordance with Claim 13, characterised in that the comparator circuit (20) contains a correlator (21).

15. Device in accordance with Claim 14, characterised in that the display arrangement (30) is designed to display the correlation results versus the distance ($r_i$) as an intensity recording (31).

16. Device for passive determination of the speed of a vehicle generating broad-band self-generated wave energy, using at least one transducer (10) to receive the wave energy in a propagation layer with dispersion properties and a following computing circuit (12) for frequency analysis and a memory circuit for storage of reception signal frequency spectra formed in the computing circuit (12) versus frequency (f) and time (t) and for read-out of frequency-dependent and/or time-dependent intensity distributions (I) of the stored frequency spectra, which are drivable by a clock generator at prespecifiable times, characterised in that quotients ($Q_i$) of frequency-dependent interference wavelengths ($\Lambda$) which are computed by a computer arrangement for determination of the transmission properties for propagation of at least two modes of the broad-band wave energy radiated by a source and prespecifiably quantised velocity components ($v_i$) are stored as model parameters in a model memory (14) and are outputable one after another, that time-dependent intensities (I, t) are outputable from the memory circuit (13) for each frequency ($f_i$), that the memory circuit (13) is followed by a circuit (40) for Fourier transformation to determine a time interval ($T_1$) between consecutive intensity maxima from the stored, time-dependent intensity distributions (I) for each frequency as the interference frequency (1/Ti), that the circuit (40) for Fourier transformation and the model memory (14) are connected to a comparator circuit (20) for comparing the interference frequency (1/$T_i$) with the stored quotients ($Q_i$), that the comparator circuit (20) is followed by a display arrangement (30) for displaying the comparison result versus the speed, and that if the interference frequency (1/$T_i$) is in agreement with one of the stored quotients ($Q_i$) the associated velocity component ($v_1$) represents the speed of the vehicle relative to the measurement location.

17. Device in accordance with Claim 16, characterised in that the comparator circuit (20) is designed as a multiplier circuit (41) to form the product of the quotient ($Q_i$) and the reciprocal of the time interval ($T_i$), together with an averager.

**Revendications**

1. Méthode de détermination passive des données d'objectif (r, v) d'un véhicule notamment d'un véhicule se déplaçant dans l'eau émettant une énergie d'onde autoproduite à large bande auquel cas la méthode utilisée est telle qu'en deça d'un secteur de mesure se trouve au moins un transducteur (10) destiné à recevoir l'énergie d'onde dans une couche de propagation présentant des propriétés de dispersion et que des spectres de fréquence sont formés à partir de signaux de réception du transducteur (10) à des temps préspécifiables et que leurs intensités sont mémorisées en fonction de leur fréquence (f) et du temps (t), caractérisé par le fait que des propriétés de transmission (H, Ti) pour la propagation de l'énergie d'onde émise par une source suivant une large bande sous forme de modes dans la couche de propagation, sont déterminées en fonction de la fréquence (f) pour des données d'objectif (ri, vi) quantifiées par voie préspécifiable et sont mémorisées avec les données d'objectif quantifiées (ri, vi) en tant que paramètres de modèle (H, Qi) dans une mémoire de modèle (14), que les répartitions d'intensités (I) fonction de la fréquence et/ou du temps des spectres de fréquences sont comparées aux paramètres de modèle et qu'en cas de concordance, la distance au point de mesure et/ou la vitesse, sont déterminées en tant que données d'objectif (r, v) du véhicule.

2. Méthode conformément à la revendication 1, destinée à déterminer la distance, caractérisée par le fait qu'en tant que paramètres de modèle, des fonctions de transmission (H) pour la propagation de modes de différentes distances (ri), entre le point de mesure et la source formant la donnée d'objectif quantifiée (ri) sont déterminées en fonction de la fréquence (f), que toutes les fonctions de transmission (H) mémorisées dans la mémoire de modèle (14) sont comparées à la répartition d'intensités (I) fonction de la fréquence du spectre de fréquences du signal de réception momentané et qu'en cas de concordance, la distance (ri) de la fonction de transmission (H) indique la distance.

3. Méthode conformément à la revendication 2, caractérisée par le fait que pour effectuer la comparaison, le spectre de fréquences momentané est correlé à toutes les fonctions de transmission (H) et que les résultats de corrélation sont comparés l'un à l'autre et que la distance est égale à la distance (ri) pour laquelle le résultat de corrélation est le plus élevé.

4. Méthode conformément à la revendication 3, caractérisée par le fait que tous les résultats de corrélation sont enregistrés sous forme d'un graphe d'intensités (31) déterminé en fonction de la distance (r).

5. Méthode conformément à l'une quelconque des revendications de 1 à 4, caractérisée par le fait qu'au point de mesure, plusieurs transducteurs sont combinés de manière à former un système de réception (10) conçu pour effectuer une mesure de relèvement dans un plan se présentant en parallèle par rapport à la couche de propagation et fournissant le signal de réception.

6. Méthode conformément à la revendication 1 destinée à déterminer la vitesse, caractérisée par le fait que des longueurs d'onde d'interférence (A) sont déterminées en fonction de la fréquence (f) pour la propagation d'au moins deux modes dans la couche de propagation pour différentes composantes de vitesse (v1) entre le point de mesure et la source formant la donnée d'objectif quantifiée (vi), que pour chaque fréquence (f), des quotients (Qi) de la longueur d'onde d'interférence (A) et les composantes de vitesse (vi) ou vice versa, sont formées et constituent les paramètres de modèle, qu'à partir des répartitions d'intensité (I) fonction du temps pour chaque fréquence (fi), un intervalle de temps périodique (Ti) entre maximums consécutifs est déterminé comme fréquence d'interférence (1/Ti) puis est comparé aux quotients mémorisés (Qi) et qu'en cas de concordance, la composante de vitesse (vi) associée représente la vitesse du véhicule par rapport au point de mesure.

7. Méthode conformément à la revendication 6, caractérisée par le fait que l'intervalle de temps périodique (Ti) est déterminé par la transformation de Fourier de la répartition d'intensité (I) réalisée en fonction du temps.

8. Méthode conformément à l'une quelconque des revendications de 1 à 6, caractérisée par le fait que les paramètres de modèle pour la propagation de deux modes dans une couche de propagation de hauteur constante sont calculés.

9. Méthode conformément à la revendication 8, caractérisée par le fait que les paramètres de modèle relatifs à la détermination de la distance font l'objet d'une approximation effectuée par des fonctions de cosinus dont les arguments sont égaux au produit des distances (r), multiplié par le facteur $\pi$ et la valeur réciproque de la longueur d'onde d'interférence (A) fonction de la fréquence.

10. Méthode conformément à l'une quelconque des revendications 1 à 9, caractérisée par le fait que les paramètres de modèle sont calculés pour différentes hauteurs de la couche de propagation.

11. Méthode conformément à l'une quelconque des revendications 1 à 6, caractérisée par le fait que les propriétés de transmission (H,T) du secteur de mesure sont mesurées et que la source est un véhicule dont le cap passe directement au-dessus du secteur de mesure et/ou se trouve à une distance latérale du point de mesure et que les paramètres de modèle (H, Qi) sont calculés à partir des propriétés de transmission (H, T).

**12.** Méthode conformément à l'une quelconque des revendications 1 à 11 caractérisée par le fait que la mémoire de modèle (14) renferme constamment des paramètres de modèle (H, Qi) qui sont fonction du secteur de mesure.

**13.** Dispositif prévu pour la détermination passive de la distance d'un véhicule émettant de l'énergie d'onde à large bande autoproduites en utilisant au moins un transducteur (10) pour recevoir l'énergie d'onde dans une couche de propagation à propriétés de dispersion, un circuit calculateur aval (12) pour l'analyse de la fréquence et un circuit mémoire (13) pour la mise en mémoire de spectres de signaux de fréquence de réception formés par le circuit calculateur (12) en fonction de la fréquence (f) et du temps (t) ainsi que pour la sortie par lecture d'intensités de répartition (I) fonction de la fréquence et/ou du temps de spectres de fréquence mémorisés pouvant être attaqués par un cadenceur à des temps préspécifiables et caractérisé par le fait que des fonctions de transmission (H) pour distances (ri) quantifiées de façon préspécifiable et calculées par un dispositif calculateur destiné à déterminer les propriétés de transmission de la propagation d'une énergie d'onde à large bande émise par une source sous forme de modes sont mémorisées en tant que paramètres de modèle dans une mémoire de modèle, peuvent être sorties l'une après l'autre, que le circuit-mémoire (13) et la mémoire de modèle (14) sont reliés à un circuit de comparaison (20) destiné à comparer toutes les fonctions de transmission (H) mémorisées dans la mémoire de modèle (14) avec la répartition d'intensité (I) du spectre de fréquence du signal de réception reçu momentanément, que le circuit de comparaison (20) est suivi par un dispositif d'affichage (30) destiné à afficher le résultat de comparaison en fonction de la distance (ri) et qu'en cas de concordance de la répartition d'intensité (I) du spectre de fréquence avec l'une des fonctions de transmission (H), la distance (r) relative à la fonction de transmission (H) représente la distance (ri) du véhicule par rapport au point de mesure.

**14.** Dispositif conformément à la revendication 13, caractérisé par le fait que le circuit de comparaison (20) renferme un corrélateur (21).

**15.** Dispositif conformément à la revendication 14, caractérisé par le fait que le dispositif d'affichage (30) a été conçu pour afficher les résultats de corrélation en fonction de la distance (ri) en tant qu'enregistrement d'intensités (31).

**16.** Dispositif destiné à déterminer par voie passive la vitesse d'un véhicule émettant une énergie d'onde à large bande autoproduite en utilisant au moins un transducteur (10) pour recevoir l'énergie d'onde dans une couche de propagation à propriétés de dispersion et un circuit calculateur aval (12) prévu pour effectuer l'analyse de la fréquence ainsi qu'un circuit de mémorisation des spectres de signaux de fréquences formés dans le circuit calculateur (12) en fonction de la fréquence (f) et le temps (t) ainsi que pour la sortie par lecture des répartitions d'intensités (I) fonction de la fréquence et/ou du temps de spectres de fréquence mémorisés pouvant être attaqués par un cadenceur à des temps préspécifiables, caractérisé par le fait que les quotients (Qi) de longueurs d'ondes d'interférence (A) calculés par un dispositif calculateur pour déterminer les propriétés de transmission de la propagation d'au moins deux modes de l'énergie d'onde à large bande émise par une source et des composantes de vitesse (vi) quantifiées de façon préspécifiable sont mémorisés en tant que paramètres de modèle (14) pouvant être sortis l'un après l'autre, que des intensités (I, t) peuvent être sorties par le circuit de mémoire (13) pour chaque fréquence (fi), que le circuit mémoire (13) est suivi par un circuit (40) pour transformation Fourier pour déterminer l'intervalle de temps (Ti) entre maximums d'intensités consécutifs à partir des répartitions d'intensité (I) pour chaque fréquence en tant que fréquence d'interférence (1/Ti), que le circuit (40) pour la transformation Fourier et la mémoire de modèle (14) sont branchés à un circuit de comparaison (20) destiné à comparer la fréquence intermédiaire (1/Ti) aux quotients (Qi) mémorisés, que le circuit de comparaison (20) est suivi par un dispositif d'affichage (30) pour afficher le résultat de comparaison en fonction de la vitesse et que si une fréquence d'interférence (1/Ti) concorde avec l'un des quotients (Qi) mémorisés, la composante de vitesse associée (Vi) représente la vitesse du véhicule par rapport au point de mesure.

**17.** Dispositif conformément à la revendication 16, caractérisé par le fait que le circuit de comparaison (20) a été conçu en tant que multiplicateur (41) pour former le produit- du quotient (Qi) et la valeur réciproque de l'intervalle de temps (Ti) avec un formeur de moyennes.

Fig. 1

Fig. 2

$H_1(f, r_1)$

$H_2(f, r_2)$

$H_3(f, r_3)$

Fig. 3

EP 0 412 248 B1

CPA  $r_3$  $r_2$  $r_1$  $\overleftarrow{r}$

$\downarrow t$

S

$t_1$

$t_2$

$t_3$

$t_4$

Fig. 4

p

$\Lambda$

r

Fig. 5

Fig. 6

EP 0 412 248 B1